# EUROPÄISCHE PATENTSCHRIFT

(11) **EP 1 068 966 B1**
(45) Veröffentlichungstag und Bekanntmachung des Hinweises auf die Patenterteilung: **28.09.2005**
(21) Anmeldenummer: 00113495.6
(22) Anmeldetag: 26.06.2000
(51) Int. Cl.: B60H 1/00, B60H 1/24

(54) **Verfahren zur Herstellung eines Luftleitsystems für ein Kraftfahrzeug**
Method for manufacturing an air conduit system for a vehicle
Procédé de fabrication d'un système de conduit d'air pour véhicule

(30) Priorität: 16.07.1999 DE 19933533
(43) Veröffentlichungstag der Anmeldung: 17.01.2001
(73) Patentinhaber: Bayerische Motoren Werke Aktiengesellschaft, 80809 München (DE)
(72) Erfinder: Allershausen, Eckardt, 81377 München (DE)

(56) Entgegenhaltungen:
- JP-A- 62 006 821
- US-A- 4 733 739

## Beschreibung

Die Erfindung bezieht sich auf ein Verfahren zum Herstellen eines Luftleitsystems für ein Kraftfahrzeug, und insbesondere für eine Kraftfahrzeug-Klimaanlage, nach dem Oberbegriff des Patentanspruchs 1.

Es ist bekannt, bei Luftleitsystemen von Personenkraftfahrzeugen die Luftzufuhrrohre für die vordere Seitenscheibenbelüftung auf der Rückseite der Instrumententafel zu befestigen oder in diese zu integrieren, wie beispielsweise die EP-B 141 959 zeigt. Wegen des relativ großen Strömungsquerschnitts der Luftzufuhrrohre und angesichts der zumeist ohnehin beengten Platzverhältnisse im Bereich der Instrumententafel ist eine solche Anordnung jedoch mit erheblichen Einbauschwierigkeiten verbunden.

Zur Erhöhung der Packungsdichte im Bereich des Armaturenbretts wird daher bei dem aus der DE-A 42 32 847 bekannten Luftleitsystem der Innenraum des die A-Säulen des Kraftfahrzeugs miteinander verbindenden, im Querschnitt geschlossenen Querträgers zur Luftzufuhr zu den vorderen, seitlichen Luftaustrittsdüsen ausgenutzt, derart, dass in den Querträger als Korrosionsschutz, und um störende Wärmespeichereffekte des Querträgers zu vermeiden, ein über Abstandhalter wärmeisoliertes Kunststoffrohr eingezogen wird. Zu diesem Zweck ist der Querträger als geradliniges Strangpressprofil ausgebildet und im mittleren Abschnitt großflächig durchbrochen, und an das Kunststoffrohr sind nachträglich gesonderte Endstücke zur Luftumlenkung im Aus- oder Einlassbereich angefügt. Aus Einbau- und Festigkeitsgründen werden für Fahrzeugstrukturen jedoch häufig abgewinkelte oder gekrümmte, über längere Abschnitte im Querschnitt geschlossene Quer- oder Hohlträger benötigt, für die eine derartige Luftführung mit nachträglich eingezogenem Innenrohr nicht oder nur mit unverhältnismäßig großem Bauaufwand anwendbar ist.

Aus der JP 62006821 ist ein Verfahren zum Herstellen eines eingangs genanntes Luftleitsystems bekannt, bei dem ein Innenrohr aus Kunststoff nachträglich von einem Hohlträgerende aus in den durch Verschweißen der Hohlträgerteile fertig gestellten Hohlträger eingezogen wird. Anschließend wird das Innenrohr unter Wärme- und Innendruckeinwirkung aufgeweitet und dabei plastisch verformt, so dass es sich an die Innenfläche des Hohlträgers anlegt und mit diesem verklebt.

Hier erfolgt also die Fertigung des Hohlträgers und das Einziehen des Innenrohres nacheinander in zwei getrennten Arbeitsschritten. Nachteilig hierbei ist es, dass nur gerade Hohlträger hergestellt werden können, da gekrümmte oder sogar abknickende Hohlträger kein Einschieben eines Innenrohres erlauben.

Aufgabe der Erfindung ist es, Verfahren zum Herstellen eines Luftleitsystems der eingangs genannten Art so auszubilden, dass selbst stark gekrümmte oder abgewinkelte, über größere Längen im Querschnitt geschlossene Hohlträger der Fahrzeugstruktur auf einfache Weise und ohne störende Wärmespeicher- und Korrosionseffekte zur Luftführung nutzbar gemacht werden. Diese Aufgabe wird erfindungsgemäß durch das im Patentanspruch 1 gekennzeichnete Luftleitsystem gelöst.

Bei dem erfindungsgemäßen Luftleitsystem entfällt das umständliche, nachträgliche Einziehen eines Innenrohres und stattdessen wird der Hohlträger in zwei Halbschalen längsgeteilt und das Innenrohr wird vor dem Verbinden der beiden Halbschalen zwischen diese eingelegt, so daß sich der Hohlträger allein unter dem Gesichtspunkt einer hohen konstruktiven Festigkeit und einbaugünstigen Raumform gestalten und dennoch korrosionsgeschützt und wärmeisoliert unmittelbar in das Luftleitsystem einbeziehen lässt, mit der Besonderheit, dass das Innenrohr problemlos auch als starres Kunststoffrohr mit örtlich abgebogenen oder erweiterten Profilabschnitten ausgebildet sein kann, ohne dass der Hohlträger entsprechend große Durchbrüche oder Querschnittsveränderungen zum Einschieben des Innenrohres aufweisen muss. Hierdurch ist es möglich, im Querschnitt geschlossene Hohlträger praktisch beliebiger Form und Länge auf herstellungsmäßig einfache, Platz sparende Weise und ohne nachteilige Nebeneffekte als integralen Bestandteil eines Kraftfahrzeug-Luftleitsystems zu nutzen.

Weil die Formgebung des Innenrohrs nicht dadurch eingegrenzt wird, dass dieses nachträglich in den Hohlträger eingezogen werden muss, sind die Luftein- und -auslassstücke des Innenrohrs nach Anspruch 2 vorzugsweise einteilig an dieses angeformt.

Im Hinblick auf eine sichere Positionierung und zugleich wirksame Wärmeisolation besitzt das Innenrohr nach Anspruch 3 zweckmäßigerweise eine punkt- oder linienförmige Anlage an den Hohlträgerteilen. Zur Erhöhung der Wärmeisolationswirkung und zusätzlich zu Schallschutzzwecken kann das Innenrohr, wie nach Anspruch 4 bevorzugt, vor dem Einlegen zwischen die Hohlträgerteile mit einer Schaumstoffschicht belegt sein.

Aus Festigkeitsgründen sind die Hohlträgerteile nach Anspruch 5 vorzugsweise in den Luftein- und -auslassbereichen des Innenrohrs materialverstärkt.

In herstellungsmäßig besonders bevorzugter Weise sind die Hohlträgerteile nach Anspruch 6 mit einstückig angeformten Anschlussstellen für oder an weitere Fahrzeugkomponenten versehen.

Eine weitere fertigungsmäßige Vereinfachung wird nach Anspruch 7 vorzugsweise dadurch erreicht, dass die Hohlträgerteile im Wege des Tiefziehverfahrens hergestellt sind.

Ebenfalls aus Herstellungsgründen, aber auch um das Innenrohr beim Verbinden der Hohlträgerteile wirksam vor einer Überhitzung zu schützen, sind die Hohlträgerteile nach Anspruch 8 zweckmäßigerweise miteinander punktverschweißt.
Nach Anspruch 9 schließlich ist als Hohlträger vorzugsweise der oberhalb des Heiz- oder Klimageräts angeordnete, die A-Säulen des Kraftfahrzeugs verbindende Querträger für die Instrumententafel vorgesehen, in den dann vor dem Verbinden der beiden Querträger-Halbschalen zwei getrennte, zur Trägermitte spiegelsymmetrisch angeordnete Innenrohre zur Luftversorgung der linken bzw. rechten Fahrzeughälfte eingelegt werden.

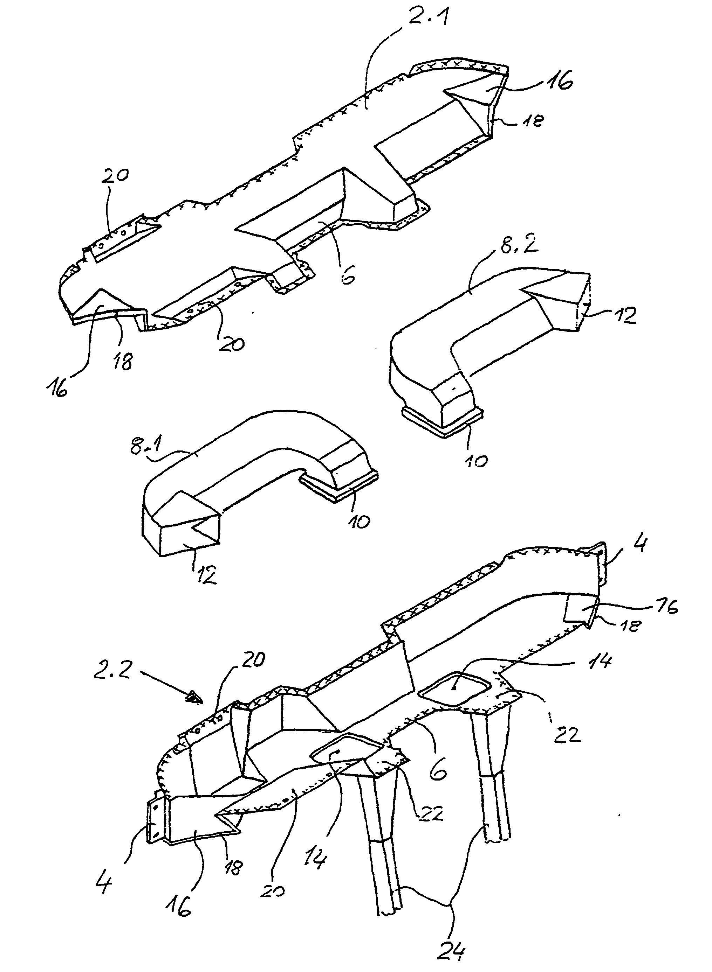

Weitere Merkmale der Erfindung ergeben sich aus der nachfolgenden Beschreibung eines Ausführungsbeispiels in Verbindung mit der Zeichnung. Diese zeigt in ihrer einzigen Figur in stark schematisierter Darstellung eine perspektivische Ansicht eines in zwei Halbschalen längsgeteilten Hohlträgers in Form eines Querträgers für die Instrumententafel einschließlich der die Luftführung übernehmenden Innenrohre vor dem Zusammenbau.

Der in der Zeichnung dargestellte Hohlträger der Fahrzeugstruktur ist in zwei Halbschalen 2.1 und 2.2 längsgeteilt, die im zusammengefügten Zustand den sich über die Breite des Fahrzeuginnenraums erstreckenden Querträger 2 für die Instrumententafel bilden, welcher über Endstücke 4 mit den (nicht gezeigten) A-Säulen des Fahrzeugs verschraubt wird. Der Querträger 2 besitzt aus Einbaugründen eine mehrfach abknickende Form und ist im Hinblick auf eine hohe konstruktive Festigkeit als im Querschnitt geschlossener Kastenträger mit einem relativ großflächigen Innenquerschnitt ausgebildet.

Zur Luftführung von dem unterhalb des Querträger-Mittelabschnitts 6 angeordneten - ebenfalls nicht gezeigten - Heiz-/Klimagerät zu den vorderen Seitenfenster-Belüftungsdüsen sind zwischen die Halbschalen 2.1, 2.2 zwei zur Querträgermitte spiegelsymmetrische, jeweils mehrfach abgebogene Innenrohre 8.1 und 8.2 eingelegt, die mit einteilig angeformten Luftein- und -auslassstücken 10, 12 zum unmittelbaren Anschluss an das Heiz-/Klimagerät bzw. die Luftaustrittsdüsen versehen und z.B. aus Kunststoff, etwa Polypropylen, hergestellt sind. Die Innenrohre 8.1 und 8.2 sind im Querträger 2 über Abstandhalter fixiert und können wahlweise oder zusätzlich mit einer akustisch und thermisch wirksamen Schaumstoffschicht ummantelt sein.

Die Halbschalen 2.1 und 2.2 sind z.B. aus Aluminium im Tiefziehverfahren gefertigt, wobei in der unteren Halbschale 2.2 mittlere, an die Innenrohrabschnitte 10 engsitzend angepasste Einschuböffnungen 14 und in beiden Halbschalen 2.1 und 2.2 seitliche, die Innenrohrabschnitte 12 formgleich umschließende Aufnahmetaschen 16 ausgeformt sind. Zur Erhöhung der örtlichen Festigkeit sind die Einschuböffnungen 14 und Aufnahmetaschen 16 - wie bei 18 gezeigt - randverstärkt. Nach dem Einlegen der Innenrohre 8.1 und 8.2 werden die Halbschalen 2.1 und 2.2 durch randseitige, in der Zeichnung kreuzmarkierte Punktschweißstellen zu einem integralen Querträger 2 lastfest miteinander verbunden.

Die Längsteilung des Querträgers 2 in zwei getrennt hergestellte Halbschalen 2.1 und 2.2 gestattet ferner die einteilige Anformung weiterer Befestigungsstellen, insbesondere der Lenksäulenstütze 20 und der Anschlussstellen 22 für die den Querträger 2 im Mittelabschnitt 6 am Fahrzeugtunnel abstützenden Rechteckstreben 24, zwischen denen das Heiz-/Klimagerät angeordnet wird, sowie für zusätzliche, nicht dargestellte Fahrzeugkomponenten, etwa den Beifahrer-Airbag oder die Knieschutzhalter.

## Patentansprüche

1. Verfahren zum Herstellen eines Luftleitsystems für ein Kraftfahrzeug, insbesondere für eine Kraftfahrzeug-Klimaanlage, bei welchem zur Luftführung mindestens ein im Querschnitt geschlossener längsgeteilter metallischer Hohlträger (2) der Fahrzeugstruktur vorgesehen wird, welcher mit einem in Hohlträgerlängsrichtung verlaufenden, luftführenden Innenrohr (8) zur Wärme-, Schall- und/oder Feuchtigkeitsisolation bestückt wird,
**dadurch gekennzeichnet, dass** das Innenrohr (8) vor dem Verbinden der Hohlträgerteile (2.1, 2.2) zwischen diese eingelegt wird und anschließend die Hohlträgerteile unter Einschluss des Innenrohrs miteinander zum fertigen Hohlträger verbunden werden.

2. Verfahren nach Anspruch 1,
**dadurch gekennzeichnet, dass** das Innenrohr (8) mit einteilig angeformten Luftein- und -auslassstücken (10, 12) ausgebildet wird.

3. Verfahren nach Anspruch 1 oder 2,
**dadurch gekennzeichnet, dass** das Innenrohr (8) mit einer punkt- oder linienförmige Anlage in die Hohlträgerteile (2.1, 2.2) eingelegt wird.

4. Verfahren nach einem der vorhergehenden Ansprüche,
**dadurch gekennzeichnet, dass** das Innenrohr (8) vor dem Einlegen in die Hohlträgerteile (2.1, 2.2) mit einer Schaumstoffschicht belegt wird.

5. Verfahren nach einem der vorhergehenden Ansprüche,
**dadurch gekennzeichnet, dass** die Hohlträgerteile (2.1, 2.2) in den Luftein- und -auslassbereichen des Innenrohrs (8) materialverstärkt (bei 18) ausgebildet werden.

6. Verfahren nach einem der vorhergehenden Ansprüche,
**dadurch gekennzeichnet, dass** an die Hohlträgerteile (2.1, 2.2) Anschlussstellen (20, 22) für und/oder an weitere Fahrzeugkomponenten integral angeformt werden.

7. Verfahren nach einem der vorhergehenden Ansprüche,
**dadurch gekennzeichnet, dass** die Hohlträgerteile (2.1, 2.2) im Wege des Tiefziehverfahrens hergestellt werden.

8. Verfahren nach einem der vorhergehenden Ansprüche,
**dadurch gekennzeichnet, dass** die Hohlträgerteile (2.1, 2.2) miteinander punktverschweißt werden.

9. Verfahren nach einem der vorhergehenden Ansprüche, mit einem als Hohlträger ausgebildeten, die A-Säulen des Kraftfahrzeugs miteinander verbindenden Querträger für die Instrumententafel,
**dadurch gekennzeichnet, dass** der Querträger (2) in zwei Halbschalen (2.1, 2.2) längsgeteilt wird und vor dem Verbinden der beiden Halbschalen in diese zwei getrennte, zur Querträgermitte spiegelsymmetrisch angeordnete Innenrohre (8.1, 8.2) zur Luftversorgung der linken bzw. rechten Fahrzeughälfte eingelegt werden.

## Claims

1. A method of producing an air piping system for a motor vehicle, especially for a vehicle air-conditioning system, wherein the air is circulated by at least one closed-section longitudinally divided metal hollow bearer (2) of the vehicle structure, which hollow bearer is equipped with a longitudinal air-circulating inner pipe (8) for thermal, sound and/or moisture insulation, **characterised in that** before the parts (2.1, 2.2) of the hollow bearer are joined together the inner pipe (8) is inserted between them, after which the hollow-bearer parts enclosing the inner pipe are joined to form the finished hollow bearer.

2. A method according to claim 1, **characterised in that** the inner pipe (8) is constructed with integrally-moulded air inlet and outlet parts (10, 12).

3. A method according to claim 1 or 2, **characterised in that** the inner pipe (8) is inserted with punctiform or linear contact into the parts (2.1, 2.2) of the hollow bearer.

4. A method according to any of the preceding claims, **characterised in that** the inner pipe (8) is coated with a layer of foam before being inserted into the parts (2.1, 2.2) of the hollow bearer.

5. A method according to any of the preceding claims, **characterised in that** the parts (2.1, 2.2) of the hollow bearer are reinforced with material (at 18) in the air inlet and air outlet regions of the inner pipe (8).

6. A method according to any of the preceding claims, **characterised in that** connecting places (20, 22) for and/or on other components of the vehicle are integrally formed on the parts (2.1, 2.2) of the hollow bearer.

7. A method according to any of the preceding claims, **characterised in that** the parts (2.1, 2.2) of the hollow bearer are produced by deep drawing.

8. A method according to any of the preceding claims, **characterised in that** the parts (2.1, 2.2) of the hollow bearer are spotwelded together.

9. A method according to any one of the preceding claims, comprising a transverse bearer for the instrument panel and in the form of a hollow bearer connecting the A-columns of the vehicle to one another, **characterised in that** the transverse bearer (2) is longitudinally divided into two half-shells (2.1, 2.2) and before the two half-shells are joined, two separate inner pipes (8.1, 8.2) arranged with mirror symmetry relative to the middle of the transverse bearer are inserted into the half-shells for supplying air to the left and right side respectively of the vehicle.

## Revendications

1. Procédé de fabrication d'un système de conduit d'air pour véhicule, en particulier pour une installation de climatisation de véhicule, selon lequel il est prévu pour conduire l'air dans la structure du véhicule, au moins un support métallique creux, divisé longitudinalement et à section fermée, garni selon sa direction longitudinale d'un tube interne (8) conduisant l'air avec une isolation thermique acoustique, et/ou contre l'humidité,
**caractérisé en ce que**
le tube interne (8) est monté entre les parties (2.1, 2.2) du support transversal avant qu'elles soient réunies, puis ces parties sont reliées pour donner le support creux fini incluant le tube interne.

2. Procédé selon la revendication 1,
**caractérisé en ce que**
le tube interne (8) est constitué d'un seul bloc avec des pièces moulées pour l'entrée et de sortie d'air (10, 12).

3. Procédé selon la revendication 1 ou 2,
**caractérisé en ce que**
le tube interne (8) est enserré dans les parties du support creux (2.1, 2.2) dans un contact ponctuel ou linéaire avec celles-ci.

4. Procédé selon une des revendications précédentes,
**caractérisé en ce que**
le tube interne (8) avant son montage dans les parties de support creux (2.1, 2.2) est garni d'une couche de mousse.

5. Procédé selon une des revendications précédentes,
**caractérisé en ce que**
les parties de support creux (2.1, 2.2) présentent un renforcement de la matière (en 18) dans les zones d'entrée et de sortie d'air du tube interne (8).

6. Procédé selon une des revendications précédentes,
**caractérisé en ce qu'**
aux parties de support creux (2.1, 2.2) des zones de raccordement (20, 22) pour d'autres composants du véhicule sont intégrées par formage.

7. Procédé selon une des revendications précédentes,
**caractérisé en ce que**
les parties de support creux (2.1, 2.2) sont fabriquées par emboutissage.

8. Procédé selon une des revendications précédentes,
**caractérisé en ce que**
les parties de support creux (2.1, 2.2) sont reliées entre elles par des points de soudure.

9. Procédé selon une des revendications précédentes, avec un support transversal du tableau de bord, de forme creuse qui relie les montants A du véhicule
**caractérisé en ce que**
le support transversal (2) est divisé longitudinalement en deux demi-coquilles (2.1, 2.2) et, dans celles-ci, avant leur réunion, sont insérés symétriquement par rapport au milieu du support transversal, des tubes internes (8.1, 8.2) pour alimenter en air la moitié gauche et la moitié droite du véhicule.
